**Europäisches Patentamt**

**European Patent Office**

**Office européen des brevets**

(11) Veröffentlichungsnummer: **0 183 947 B1**

(12) **EUROPÄISCHE PATENTSCHRIFT**

(45) Veröffentlichungstag der Patentschrift: **03.06.92**

(21) Anmeldenummer: **85112908.0**

(22) Anmeldetag: **11.10.85**

(51) Int. Cl.⁵: **H04M 15/34**

(54) Verfahren für eine Wählnebenstellenanlage, bei der eine auf die einzelnen Teilnehmerstellen bezogene Gebührenerfassung für den abgehenden Amtsverkehr erfolgt.

(30) Priorität: **22.11.84 DE 3442609**

(43) Veröffentlichungstag der Anmeldung:
**11.06.86 Patentblatt 86/24**

(45) Bekanntmachung des Hinweises auf die
Patenterteilung:
**03.06.92 Patentblatt 92/23**

(84) Benannte Vertragsstaaten:
**AT BE CH DE FR GB IT LI NL**

(56) Entgegenhaltungen:
**EP-A- 0 006 265**
**EP-A- 0 027 596**
**DE-A- 2 323 663**
**FR-A- 2 305 075**
**GB-A- 2 104 347**

**PATENT ABSTRACTS OF JAPAN, Band 5, Nr. 137 (E-72)[809], 29. August 1981; & JP-A-56 73 964**

**PATENT ABSTRACTS OF JAPAN, Band 6, Nr. 170 (E-128)[1048], 3. September 1982; & JP-A-57 87 662**

(73) Patentinhaber: **SIEMENS AKTIENGESELL-SCHAFT**
**Wittelsbacherplatz 2**
**W-8000 München 2(DE)**

(72) Erfinder: **Böttger, Detlev, Dipl.-Ing.**
**Hörischestrasse 60**
**W-4600 Dortmund 70(DE)**
Erfinder: **Geier, Julius, Ing. grad.**
**Schönstrasse 110**
**W-8000 München 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren für eine interne und externe Verkehrsbeziehungen ermöglichende speicherprogrammierte Wählnebenstellenanlage, die zur Abwicklung von Vermittlungsvorgängen und von sonstigen Steuervorgängen eine Steuerrechnereinheit aufweist, die Zugriff zu entsprechenden Speicheranordnungen hat, in denen die hierfür notwendigen Informationen abgelegt sind und bei der für die einzelnen Teilnehmerstellen unterschiedliche Zugangsberechtigungen für bestimmte Arten von Verkehrsbeziehungen vorgesehen sind und bei der eine auf die einzelnen Teilnehmerstellen bezogene Gebührenerfassung für den abgehenden Amtsverkehr erfolgt.

In modernen Wählnebenstellenanlagen kann ein Nebenstellenteilnehmer von der jeweiligen Fernsprechstation aus eine große Anzahl von Leistungsmerkmalen in Anspruch nehmen. Dies wurde u.a. durch die Verwendung von Halbleiterspeichern und durch die Verwendung von Steuerrechnereinheiten ermöglicht. Bei einem programmgesteuerten System können Leistungsmerkmale den einzelnen Teilnehmerstellen durch eine entsprechende Informationseingabe an einer vorbestimmten Betriebsstelle zugeteilt, geändert oder rückgängig gemacht werden. Für die einzelnen Teilnehmerstellen können unterschiedliche Berechtigungen für bestimmte Verkehrsbeziehungen vorgesehen werden. Es wird beispielsweise zwischen Amts-, Halbamts,- und Nichtamtsberechtigung unterschieden.

Bei der Erfassung der Gesprächsgebühren im abgehenden Amtsverkehr gibt es mehrere Gebührenerfassungsarten, die sich einzeln oder kombiniert einsetzen lassen. Bei der zentralen Gesprächsdatenerfassung erfolgt ein automatisches Erfassen, Speichern und Registrieren aller für einen Nachweis notwendigen Daten im Verlauf eines abgehenden Amtsgespräches (siehe z.B EP-A-0 006 265). Im Zusammenhang mit der automatischen Gesprächsgebührenerfassung ist es bekannt, daß ein Teilnehmer durch ein Gesprächskennzeichen aufgrund einer vorgewählten Kennzahl zum Ausdruck bringen kann, daß es sich bei dem nachfolgenden Amtsgespräch um ein Privatgespräch handelt. Die bestimmte Kennzahl ist für alle Teilnehmerstellen einheitlich festgelegt. Da lediglich festgestellt wird, ob eine Teilnehmerstelle zur Führung eines Amtsgespräches berechtigt ist, besteht die Möglichkeit, einen anderen Teilnehmer mit den durch das Privatgespräch verursachten Kosten zu belasten.

Die gebührenmäßige Erfassung von Privatgesprächen kann auch am Vermittlungsplatz erfolgen. Dies betrifft sowohl Teilnehmer, die lediglich berechtigt sind über den Vermittlungsplatz Amtsgespräche aufzubauen, als auch an sich amtsberechtigte Teilnehmer, die keine dienstliche sondern eine private Amtsverbindung herstellen wollen. Eine solche Gesprächsverbindung wird vom betreffenden Nebenstellenteilnehmer bei der Vermittlungsperson angemeldet. Das Zuteilen der Amtsverbindung durch die Vermittlung kann dann im Sofortverkehr unmittelbar oder im Rückrufverkehr zu einem späteren Zeitpunkt geschehen. Die Vermittlungsperson notiert beispielsweise auf einem Gesprächszettel die für die Erfassung der Gesprächsgebühren notwendigen Angaben. Ein solchees Verfahren für die Abrechnung von Privatgesprächen ist insbesondere für solche Anlagen sehr personalintensiv, bei denen viele Gespräche in dieser Weise zu registrieren sind.

Es ist die Aufgabe der Erfindung, die bei den bekannten Verfahren zur Erfassung von Privatgesprächen auftretenden Nachteile zu vermeiden.

Dies wird dadurch erreicht, daß zur Deklarierung eines beabsichtigten Amtsgespräches als ein Privatgespräch durch den betreffenden Teilnehmer von der Teilnehmerstelle aus die Aussendung eines ihm individuell zugeordneten Kennzeichens und aufgrund der in diesem Zusammenhang durchgeführten selbsttätigen Identifizierung dieser Teilnehmerstelle ein Identifizierungs-Kennzeichen zu einer, zugeführte Daten verarbeitenden und vermittlungstechnische Steuerinformationen liefernden Einheit bewirkt wird, daß diese daraufhin prüft, ob das Identifizierungs-Kennzeichen und das individuell zugeodnete Kennzeichen einer als Speicherinformation vorliegenden fest vorgegebenen Zuordnung entspricht, daß nur bei einem positiven Prüfergebnis die Aussendung eines Kennzeichens, das das beabsichtigte Amtsgespräch als ein Privatgespräch klassifiziert, zu der Gebührenerfassungseinrichtung veranlaßt wird und daß daraufhin infolge entsprechender von der genannten Einheit veranlaßten Steuerabläufe automatisch der betreffenden Teilnehmerstelle eine Amtsleitung zugeteilt wird, so daß der Aufbau des Amtsgespräches durch den Teilnehmer eingeleitet werden kann.

In einem Speicher, zu dem die genannte Verarbeitungs-und Steuereinheit Zugriff hat, ist festgelegt, daß ein bestimmtes individuelles Kennzeichen nur zu einer fest vorgegebenen Teilnehmerstelle gehört. Nur wenn diese festgelegte Zuordnung auch tatsächlich für die erzeugten Kennzeichen zutrifft, wird der Aufbau eines Amtsgespräches ermöglicht. Damit kann die mißbräuchliche Zuschreibung der Gebühren für einen Teilnehmer, der diese nicht verursacht hat, verhindert werden. Gleichzeitig kann die Gebührenerfassung für alle Gesprächsarten, also auch für ein Privatgespräch, automatisiert werden. Eine Vermittlungsperson ist für die Erfassung der Gebühren für solche Gespräche nicht mehr erforderlich. Die Verarbeitungs- und Steuereinheit kann die vorhandene Steuerrechnereinheit sein. Soll bei einem bereits installierten System ein größerer Eingriff ausgeschlossen werden, so kann eine periphere Einheit eingesetzt werden, die die im Zusammenhang mit der Erfassung von Privatgesprächen anfallenden Daten verarbeitet und die dabei notwendigen vermittlungstechnischen Steuerinformationen liefert. Diese Einheit kann über eine, üblicherweise einem Sammelanschluß zugehörige Anschlußschaltung angeschlossen werden. Dadurch wird bei einer nachträglichen Ausrüstung nur ein geringer Eingriff notwendig.

Die Aussendung des individuell zugeordneten Kennzeichens, das für die Plausibilitätsprüfung herangezogen wird, kann durch die Eingabe einer bestimmten Ziffernkombination erfolgen, die ausschließlich einem bestimmten Teilnehmer zugeteilt wurde. Die Aussendung des individuell zugeordneten Kennzeichens kann auch durch die Abtastung eines ausschließlich einen bestimmten Teilnehmer kennzeichnenden Merkmals vorgenommen werden. Dieses Merkmal kann auf einer Kennkarte aufgebracht sein, die zur Aussendung des individuellen Kennzeichens vom Teilnehmer in ein Lesegerät eingebracht wird. Ein solches Lesegerät kann jeweils den einzelnen Teilnehmerstellen zugeordnet sein. Es wäre auch denkbar, als kennzeichnendes Merkmal den Fingerabdruck des jeweiligen Teilnehmers heranzuziehen. In einem solchen Fall müßte ein Leser für Fingerabdrücke vorhanden sein, der charakteristische Punkte des Abdruckes abtastet. Die auf diese Weise erhaltenen Werte werden dann dazu benutzt, um festzustellen ob das erhaltene Muster dieser Teilnehmerstelle zugeordnet ist.

Gemäß einer Weiterbildung der Erfindung wird in den Fällen, in denen durch die Plausibilitätsprüfung festgestellt wird, daß das individuelle Kennzeichen nicht von der hierfür festgelegten Teilnehmerstelle abgegeben wird, ein weiterer Verbindungsaufbau verhindert. Dies kann durch einen zur Teilnehmerstelle ausgesendeten Hörton signalisiert werden.

Aufgrund der vorgenommenen Deklarierung eines aufzubauenden Amtsgespräches als ein Privatgespräch, bei dem also der Teilnehmer die anfallenden Kosten übernimmt, kann die Anzahl der üblicherweise registrierten Gesprächsdaten erheblich reduziert werden.

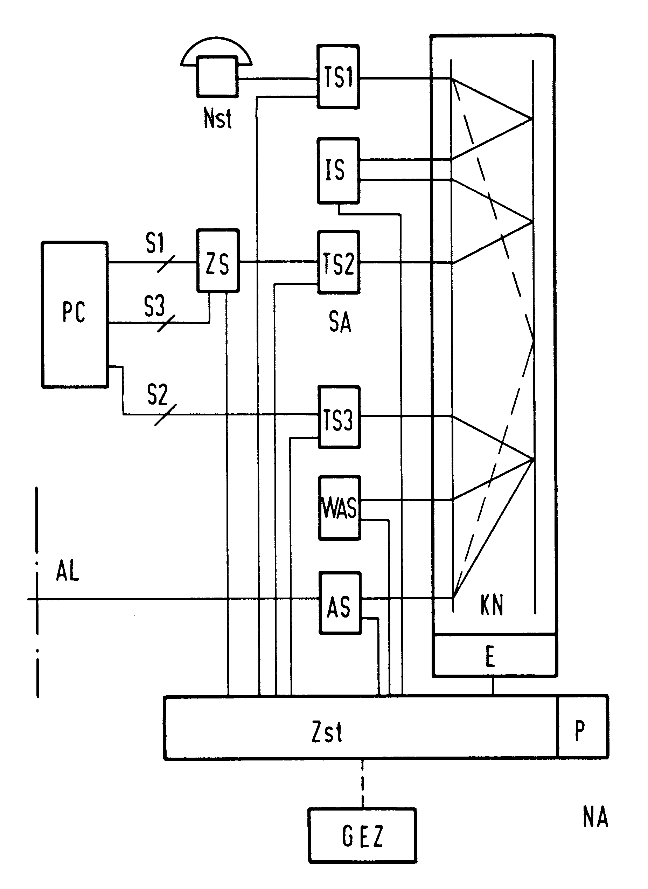

Das erfindungsgemäße Verfahren wird im folgenden anhand eines in der Zeichnung dargestellten Ausführungsbeispiels beschrieben. Das Verfahren kann grundsätzlich sowohl bei einem analogen als auch bei einem digitalen Vermittlungssystem angewendet werden. Das Ausführungsbeispiel zeigt einige Funktionseinheiten einer analogen speicherprogrammierten Nebenstellenanlage NA, deren Steuerungsabläufe im wesentlichen durch die Steuerrechnereinheit Zst gesteuert werden. Im Blockschaltbild sind die für den Standardverkehr vorgesehenen Verbindungssätze, nämlich ein Amtssatz AS, ein Internsatz IS, ein für die Aufnahme der im Mehrfrequenz-Verfahren abgegebenen Wahlinformationen vorhandener Aufnahmesatz WAS gezeigt. Diese Verbindungssätze und gegebenenfalls eine nicht dargestellte teilzentrale Steuereinheit können in Verbindung mit dem entsprechenden Anteil des Koppelnetzes KN und dem jeweiligen Koppelnetzeinsteller E für eine bestimmte Gruppe von Teilnehmerstellen vorhanden sein. Werden mehrere dieser Teilnehmergruppen gebildet, so sind diese den genannten Einheiten in entsprechender Weise zugeordnet. Stellvertretend für alle Teilnehmerstellen ist lediglich eine Teilnehmerstelle Nst dargestellt. Für jede Teilnehmerstelle ist ein Teilnehmersatz vorgesehen. Für die Teilnehmerstelle Nst ist dieser Teilnehmersatz TS1. Jeder Teilnehmersatz enthält jeweils in nicht dargestellter Weise unter anderem eine Indikationsstelle, die Zustandsänderungen auf der jeweiligen Anschlußleitung erkennt. Die einzelnen Informationen werden von der Steuerrechnereinheit Zst aufgenommen. Von dieser werden dann Einstellbefehle für die im Teilnehmersatz enthaltenen Funktionsschalter übermittelt. Dies trifft in gleicher Weise für die übrigen Verbindungssätze zu. Der jeweilige Verbindungssatz wird dabei über eine Adreßinformation makiert. Aufgrund einer Einstellinformation wird die Betätigungsart eines Funktionsschalters festgelegt und gleichzeitig der betreffende Funktionsschalter ausgewählt. Die jeweilige Einstellung desselben wird dann durch die Taktinformation des vorhandenen Systemtaktes durchgeführt.

Die genannten Teilnehmer- bzw. verbindungsindividuellen Sätze sind im Ausführungsbeispiel gleichberechtigt in der sogenannten Umkehrgruppierung an Koppelanschlüsse nur einer einzigen Koppelfeldseite angeschlossen. Der Einsteller E hat die Aufgabe alle Koppelpunkte, die für eine Verbindung durch das Koppelnetz KN benötigt werden, zu betätigen. Durch die Verbindungssätze werden die für den Aufbau, das Halten und das Auslösen einer Verbindung unmittelbar am Koppelnetz erforderlichen vermittlungstechnischen Schaltvorgänge ausgeführt. Die für die einzelnen Steuerabläufe notwendigen Programme sollen in dem Programmspeicher P, zu dem die Steuerrechnereinheit Zst Zugriff hat, enthalten sein. Die erste von einem Teilnehmer eingewählte Ziffer wird von der Steuerrechnereinheit Zst ausgewertet und dabei festgestellt, ob eine interne Verbindung oder eine externe Verbindung gewünscht wird. Im letzteren Falle würde dann der weitere Aufbau unter Zuhilfenahme eines Amtssatzes AS erfolgen. Ist eine interne Verbindung beabsichtigt, so wird ein Weg zum gewünschten Teilnehmer gesucht. Es wird der Einsteller E veranlaßt, die Einstellung der zugehörigen Koppelkontakte im Koppelnetz KN vorzunehmen. Ist der Koppelweg in Ordnung, so erfolgt die Durchschaltung und es wird zum rufenden Teilnehmer Freiton und zum gerufenen Teilnehmer das Rufsignal vom Internsatz IS ausgesendet. Ist die rufende Teilnehmerstelle mit einer Tastwahleinrichtung ausgerüstet, so wird der zur Aufnahme der damit eingegebenen Wahlinformation vorhandene Satz WAS herangezogen. Mit dem Melden der gerufenen Teilnehmerstelle folgt dann der Eintritt in den Gesprächszustand. Wird durch einen der beteiligten Teilnehmer eingehängt, so bewirkt dies durch entsprechende Befehle das Auslösen des Teilnehmersatzes und des eingestellten Weges. Der Teilnehmer eines solchen modernen Vermittlungssystems kann bestimmte Leistungsmerkmale abrufen. Dies kann durch die Wahl bestimmter Kennziffern bzw. Kennziffernfolgen vorgenommen werden.

Zur Kostenabrechnung und für Kontrollzwecke wird in einer Nebenstellenanlage eine automatische Gebührenerfassungseinrichtung GEZ eingesetzt. Ihre Aufgabe ist das Abtasten, Speichern, Aufbereiten und Registrieren der für den Nachweis notwendigen Gesprächsdaten im Verlauf eines abgehenden Amtsgespräches. Es ist bekannt, Gesprächskennzeichen in Form bestimmter Kennzahlen einzugeben, um der Gebührenerfassungseinrichtung zu melden, daß das Amtsgespräch ein Privatgespräch sein soll. Wenn die Amtsberechtigung einer Teilnehmerstelle zugeordnet ist, so könnte diese Teilnehmerstelle von einem Teilnehmer mißbräuchlich für ein solches Privatgespräch benutzt werden. Eine solche mißbräuchliche Benutzung wird trotz der automatisch erfolgenden Gebührenerfassung für ein Amtsgespräch beim erfindungsgemäßen Verfahren ausgeschlossen. Will ein Teilnehmer ein Privatgespräch führen, so wählt er zunächst eine Kennzahl, mit der ein Sammelanschluß SA erreicht wird. Der Einsatz eines solchen Sammelanschlusses hat den Vorteil, daß im Falle des Besetztseins eines Eingangs der über ihn erreichten Einheit - in diesem Falle die Einheit PC - ein anderer freier Eingang dieser Einheit erreichbar ist. Diese Einheit PC, die zugeführte Daten verarbeitet und vermittlungstechnische Steuerinformationen liefern soll, kann bei einer entsprechenden Größenordnung der Nebenstellenanlage ein Personalcomputer sein, der die für diesen Anwendungsfall erforderlichen Schnittstellen aufweist. Die Anschlußschaltung für diese Einheit PC ist mit TS2 bezeichnet. Zwischen dieser Anschlußschaltung und der Einheit PC ist im Ausführungsbeispiel die Einheit ZS geschaltet. Sie dient zur Zwischenspeicherung von ihr zugeführten Informationen, die die Einheit PC zur weiteren Verarbeitung abruft. Als Einheit ZS kann eine sogenannte Serviceanzeige verwendet werden, die üblicherweise dazu dient, die durch eine entsprechende Identifizierung festgestellte Identität der rufenden Teilnehmerstelle anzuzeigen. In dieser Einheit wird also beispielsweise als Identifikationskennzeichen die Rufnummer der betreffenden Teilnehmerstelle zunächst abgespeichert. Anschließend wird über die Schnittstelle S1 der Ruf für die Einheit PC angelegt. Diese erkennt den Rufstrom und stellt eine Leitungsschleife über den entsprechenden Abschlußwiderstand her. Von der Einheit PC wird anschließend über den aufgebauten internen Verbindungsweg zu der Teilnehmerstelle NSt von der aus das Privatgespräch geführt werden soll, ein Hörton gesendet. Dies ist für den Teilnehmer die Aufforderung, eine ihm individuell zugeordnete Kennzeichnung einzugeben. Diese Kennzeichnung kann eine ausschließlich diesem Teilnehmer zugeteilte Kennzahl sein, die er über die Wähleinrichtung seiner Teilnehmerstelle eingeben kann. Die Aussendung des individuellen Kennzeichens kann auch durch die Abtastung eines den Teilnehmer kennzeichnenden Merkmals vorgenommen werden. Dieses Merkmal kann auf einer Kennkarte, wie sie beispielsweise der Firmenausweis darstellt, aufgebracht sein. Dies kann in Form einer optisch oder magnetisch lesbaren Code-information erfolgen. Das kennzeichnende Merkmal kann auch beispielsweise der Namenszug in der Ausweiskarte sein. Die Aussendung des individuellen Kennzeichens wird dadurch vorgenommen, daß die Kennkarte vom Teilnehmer in ein Lesegerät eingebracht ist, das an der betreffenden Teilnehmerstelle vorhanden ist. Es könnte auch ein Lesegerät für Fingerabdrücke verwendet werden, durch das die charakteristischen Punkte des Abdruckmusters abgetastet werden. Es würde also der Fingerabdruck eines Teilnehmers als individuelles Kennzeichen herangezogen werden.

Das vom Teilnehmer in Form einer ihm zugeordneten Kennzahl oder auf andere Weise eingegebene individuelle Kennzeichen wird über die zu der Einheit PC bestehende interne Verbindung unmittelbar dieser Einheit zugeführt und dort abgespeichert. Anhand dieses individuellen Kennzeichens und des vermittels der Einheit ZS gewonnenen Identifizierungs-Kennzeichens wird eine Zulässigkeitskontrolle durchgeführt. Dazu wird spätestens zu diesem Zeitpunkt das Identifizierungskennzeichen, das zum Beispiel die Rufnummer der betreffenden Teilnehmerstelle darstellt, der Einheit PC übergeben. Dies kann beispielsweise über die Schnittstelle S3 erfolgen.

In einem entsprechenden Speicherbereich dieser Einheit PC ist nun abgespeichert, welches individuelle Kennzeichen einer bestimmten Teilnehmerstelle zugeteilt wurde. Durch einen Vergleich kann nun festgestellt werden, ob für das empfangene individuelle Kennzeichen und das automatisch übermittelte Identifizierungskennzeichen, beispielsweise in Form der Teilnehmerrufnummer, die festgelegte Zuordnung zutrifft. Es wird also in einfacher Weise festgestellt, ob ein Teilnehmer das Privatgespräch auch von der ihm zugehörigen Teilnehmerstelle aus aufbauen will. Führt diese Zulässigkeitskontrolle zu einem negativen Ergebnis, so kann dies dem betreffenden Teilnehmer durch die Einspeisung eines für einen solchen Fall festgelegten Hörtones mitgeteilt werden. Danach wird die Verbindung ausgelöst. Dieses Auslösen könnte auch ohne die Aussendung eines solchen Hörtones vorgenommen werden. Für die betreffende Teilnehmerstelle wird dann Besetztton angelegt.

Wird bei der Plausibilitätsprüfung festgestellt, daß das empfangene individuelle Kennzeichen und die übermittelte Rufnummer der Teilnehmerstelle tatsächlich einer abgespeicherten Paarung entspricht, so kann der Aufbau einer Externverbindung freigegeben werden. Zur Information des Teilnehmers über diese Tatsache kann ein entsprechender Hörton angelegt werden. Für das Ausführungsbeispiel soll nun vorgesehen sein, daß der betreffende Teilnehmer anschließend zunächst auflegt und auch die Einheit PC auslöst. Daraufhin wird von der Einheit PC beispielsweise über die Schnittstelle S2 eine Teilnehmerschaltung TS3 erreicht. Von der Einheit PC wird eine Privat-Amtskennziffer abgegeben. Diese wird durch die Steuerrechnereinheit Zst bewertet. Dies führt dann zur Belegung eines Amtssatzes AS und zur Übermittlung einer Information an die Gebührenerfassungseinrichtung GEZ, daß das Amtsgespräch als ein Privatgespräch zu werten ist. Die Einheit PC geht daraufhin in Rückfrage und wählt die betreffende Teilnehmerstelle Nst an. Im Rahmen dieser üblichen Vermittlungsprozeduren wird dann nach dem Melden unter Einbeziehung des Amtssatzes AS die Amtsleitung AL übergeben. Nach dieser automatischen Zuteilung einer Amtsleitung in Abhängigkeit von der vorgenommenen Zulässigkeitskontrolle kann nun der Teilnehmer das Amtsgespräch aufbauen. Die Teilnehmerschaltung TS3 kann so ausgebildet sein, daß der Teilnehmer bereits mit dem Abheben des Handapparates übernehmen kann ohne die Erdtaste betätigen zu müssen.

Bei Nebenstellenanlagen, die unmittelbar aus der Hausrückfrage eine Amtsgesprächsverbindung ermöglichen, ist ein Auslösen der Teilnehmerstelle nach der Übersendung des Hörtones, der die positive Zulässigkeitskontrolle anzeigt, nicht erforderlich. Die von der Einheit PC vorgenommene Rückfrage könnte auch grundsätzlich über die Teilnehmerschaltung TS2 vorgenommen werden, so daß die zusätzliche Ankopplung an die weitere Teilnehmerschaltung TS3 entfallen kann.

Die im Ausführungsbeispiel gezeigte Verwendung der Einheit PC ist dann besonders vorteilhaft, wenn bei einer bereits installierten Nebenstellenanlage die ursprünglich nicht mögliche automatische Zuteilung einer Amtsleitung für Privatgespräche vorgesehen werden soll.

In der Regel erfassen die automatischen Einrichtungen für die Gesprächsabrechnung eine Reihe von Gesprächsdaten, wie Ursprungs- und Zielrufnummer, Gesprächsdauer und Gesprächsgebühren, Datum und Uhrzeit. Besteht nun für einen Teilnehmer die Möglichkeit, ein Amtsgespräch als ein Privatgespräch zu kennzeichnen, so kann die Aufzeichnung der Gesprächsdaten eingeschränkt werden. Es müssen grundsätzlich lediglich nur noch die einlaufenden Gebührenimpulse und die Teilnehmerstelle, die diese Gebühren verursacht, registriert werden. Es kann zumindest eine Aufzeichnung der externen Teilnehmernummer unterbleiben.

**Patentansprüche**

1. Verfahren für eine interne und externe Verkehrsbeziehungen ermöglichende speicherprogrammierte Wählnebenstellenanlage, die zur Abwicklung von Vermittlungsvorgängen und von sonstigen Steuervorgängen eine Steuerrechnereinheit aufweist, die Zugriff zu entsprechenden Speicheranordnungen hat, in denen die hierfür notwendigen Informationen abgelegt sind und bei der für die einzelnen Teilnehmerstellen unterschiedliche Zugangsberechtigungen für bestimmte Arten von Verkehrsbeziehungen vorgesehen sind und bei der eine Gebührenerfassung für den abgehenden Amtsverkehr erfolgt, **dadurch gekennzeichnet,** daß zur Deklarierung eines beabsichtigten Amtsgespräches als ein Privatgespräch durch den betreffenden Teilnehmer von der Teilnehmerstelle aus die Aussendung eines ihm individuell zugeordneten Kennzeichens und aufgrund der in diesem Zusammenhang durchgeführten selbsttätigen Identifizierung dieser Teilnehmerstelle ein Identifizierungs-Kennzeichen zu einer, zugeführte Daten verarbeitenden und vermittlungstechnische Steuerinformationen liefernden Einheit bewirkt wird, daß diese daraufhin prüft, ob das Identifizierungs-Kennzeichen und das individuell zugeordnete Kennzeichen einer als Speicherinformation vorliegenden fest vorgegebenen Zuordnung entspricht, daß nur bei einem positiven Prüfergebnis die Aussendung eines Kennzeichens, das das beabsichtigte Amtsgespräch als ein Privatgespräch klassifiziert, zu der Gebührenerfassungseinrichtung veranlaßt wird und daß daraufhin infolge entsprechender von der Einheit veranlaßten Steuerabläufe automatisch der betreffenden Teilnehmerstelle (Nst) eine Amtsleitung (AL) zugeteilt wird, so daß der Aufbau des Amtsgespräches durch den Teilnehmer eingeleitet werden kann.

2. Verfahren nach Anspruch 1, **dadurch gekennzeichnet,** daß die die zugeführten Daten verarbeitende und vermittlungstechnische Steuerinformation liefernde Einheit eine periphere Verarbeitungs-und Steuereinheit (PC) darstellt, zu der zunächst durch den Teilnehmer eine interne Verbindung aufgebaut wird und der daraufhin sowohl das Identifizierungs-Kennzeichen und das individuell zugeordnete Kennzeichen übermittelt werden.

3. Verfahren anch Anspruch 2, **dadurch gekennzeichnet,** daß der peripheren Einheit (PC) eine, üblicherweise einem Sammelanschluß (SA) zugehörige Teilnehmeranschlußschaltung (TS2) zugeordnet ist.

4. Verfahren nach Anspruch 1, **dadurch gekennzeichnet,** daß die Aussendung des individuell zugeordneten Kennzeichens durch die Eingabe einer ausschließlich diesem bestimmten Teilnehmer zugeteilten Ziffernkombination erfolgt.

5. Verfahren nach Anspruch 1, **dadurch gekennzeichnet,** daß die Aussendung des individuell zugeordneten Kennzeichens durch die Abtastung eines ausschließlich einen Teilnehmer kennzeichnenden Merkmals erfolgt.

6. Verfahren nach Anspruch 5, **dadurch gekennzeichnet,** daß das Merkmal auf einer Kennkarte aufgebracht ist, die zur Aussendung des individuellen Kennzeichens vom Teilnehmer in ein der Teilnehmerstelle zugeordnetes Lesegerät eingebracht wird.

7. Verfahren nach Anspruch 1, **dadurch gekennzeichnet,** daß aufgrund der vorgenommenen Deklarierung eines aufzubauenden Amtsgespräches als ein Privatgespräch der Umfang der im Rahmen der vorzunehmenden automatischen Gebührenerfassung zu registrierenden Daten einschränkbar ist.

**Claims**

1. A method for a stored-programme private branch exchange which provides the possibility for internal and external traffic relations and, for the purpose or handling switching processes and other control processes, exhibits a control processor unit which has access to corresponding memory arrangements in which the information items necessary for this are stored and in which control processor unit different access authorisation levels for certain types of traffic relations are provided for the individual subscriber stations and in which the charges for the outgoing exchange line traffic are registered, characterised in that, for declaring an intended exchange line call as a private call, the subscriber concerned causes a code individually allocated to him to be sent out from the subscriber station and on the basis of the automatic identification of this subscriber station carried out in this connection an identification code is sent to a unit processing supplied data and supplying switching control information items, in that the latter thereupon checks whether the identification code and the individually allocated code corresponds to a predetermined allocation present as memory information, in that the sending out of a code which classifies the intended exchange line call as a private call to the call charge equipment is effected only in the case of a positive test result, and in that thereupon, in consequence of corresponding control sequences initiated by the unit, an exchange line (AL) is automatically allocated to the subscriber station (Nst) concerned so that the setting-up of the exchange line call can be initiated by the subscriber.

2. Method according to Claim 1, characterised in that the unit processing the supplied data and supplying switching control information represents a peripheral processing and control unit (PC) to which an internal connection is first set up by the subscriber and to which thereupon both the identification code and the individually allocated code are transmitted.

3. Method according to Claim 2, characterised in that a subscriber line interface circuit (TS2) usually belonging to a hunt group (SA) is allocated to the peripheral unit (PC).

4. Method according to Claim 1, characterised in that the sending out of the individually allocated code is effected by the input of a combination of digits exclusively allocated to this particular subscriber.

5. Method according to Claim 1, characterised in that the sending out of the individually allocated code is effected by the sampling of a feature exclusively characterizing a subscriber.

6. Method according to Claim 5, characterised in that the feature is applied to an identification card which, for the purpose of sending out the individual code, is inserted by the subscriber into a reading device allocated to the subscriber station.

7. Method according to Claim 1, characterised in that due to the fact that an exchange line call to be set up has been declared as a private call, the extent of the data to be registered for the automatic call charge registration can be restricted.

**Revendications**

1. Procédé pour une installation de sélection à postes supplémentaires, qui permet des relations internes et externes de trafic, et est programmée par enregistrement en mémoire et possède, pour l'exécution d'opérations de commutation et d'autres opérations de commande, une unité formant calculateur de commande, qui a accès à des dispositifs de mémoire correspondants dans lesquels sont mémorisées les informations nécessaires à cet effet, et dans laquelle il est prévu, pour les différents postes d'abonnés, des autorisations différentes d'accès pour des types déterminés de relations de trafic et dans laquelle une détermination des taxes est exécutée pour le trafic de départ avec le central, caractérisé par le fait que pour qu'une conversation de service envisagée soit déclarée comme étant une conversation privée par l'abonné considéré, l'émission d'un indicatif associé individuellement au poste d'abonné est déclenchée par le poste d'abonné, et, sur la base de l'identification automatique de ce poste d'abonné, exécutée dans ce contexte, l'émission d'un indicatif d'identification est déclenchée pour une unité traitant des données envoyées et délivrant des informations de commande du point de vue de la technique de commutation, que cette unité vérifie si l'indicatif d'identification et l'indicatif associé individuellement correspondent à une association prédéterminée de façon fixe, présente en tant qu'information de mémoire, que seulement dans le cas d'un résultat positif de contrôle, l'émission d'un indicatif, qui classe la conversation de service avec le central en tant que conversation privée, en direction du dispositif de détermination de taxes est déclenchée et qu'alors, en raison de cycles de commande correspondants déclenchés par l'unité, une ligne de service (AL) est affectée automatiquement au poste d'abonné concerné (Nst), de sorte que l'établissement de la conversation de service peut être déclenché par l'abonné.

2. Procédé suivant la revendication 1, caractérisé par le fait que l'unité qui traite les données envoyées et délivre l'information de commande du point de vue de la technique de commutation, représente une unité périphérique de traitement et de commande (PC), avec laquelle, tout d'abord une liaison interne est établie par l'abonné, et qu'ensuite aussi bien l'indicatif d'identification que l'indicatif associé individuellement sont retransmis.

3. Procédé suivant la revendication 2, caractérisé par le fait qu'à l'unité périphérique (PC) est associé un circuit de raccordement d'abonnés (TS2) associé habituellement à une borne de collecte (SA).

4. Procédé suivant la revendication 1, caractérisé par le fait que l'émission de l'indicatif associé individuellement est obtenue au moyen de l'introduction d'une combinaison de chiffres affectée exclusivement à cet abonné déterminé.

5. Procédé suivant la revendication 1, caractérisé par le fait que l'émission de l'indicatif associé individuellement est réalisée au moyen de l'exploration d'une caractéristique caractérisant exclusivement un abonné.

6. Procédé suivant la revendication 5, caractérisé par le fait que la caractéristique est apposée sur une carte d'identification, qui, en vue de l'émission de l'indicatif individuel, est insérée par l'abonné dans un appareil de lecture associé au poste d'abonné.

7. Procédé suivant la revendication 1, caractérisé par le fait que sur la base du fait qu'une conversation de service devant être établie est déclarée comme une conversation privée, le volume des données, qui doivent être enregistrées dans le cadre de la détermination automatique de taxes, qui doivent être exécutées, peut être limitée.